# EUROPEAN PATENT APPLICATION

(11) **EP 1 152 604 A1**
(43) Date of publication of application: **07.11.2001**
(21) Application number: 01109582.5
(22) Date of filing: 18.04.2001
(51) Int. Cl.: H04N 5/243

(54) **Video glare reduction**

(30) Priority: 24.04.2000 US 558003
(71) Applicant: Pulnix America, Inc., Sunnyvale, California 94089 (US)
(72) Inventor: Hori, Toshikazu, Cupertino, California 95014 (US); Hirono, Yutaka, San José, California 95129 (US); Siu, Raymond J., San Francisco, California 94112 (US)
(74) Representative: Ebner von Eschenbach, Jennifer

(57) **Abstract**

A CCD video camera system comprises a CCD imaging device connected to a low-gain amplifier. An analog-to-digital converter converts the analog output of the amplifier to a full-range digital video signal. Such addresses a digital look-up table to produce a digital video output according to one of several selectable range-correction curves. Such range-correction curves comprise two linear slopes that join at a knee, and the two linear parts have two different gain slopes. The range-correction curves are selected on the basis of the gain slope of the first of the two linear slopes, and the knee-point.

## Description

### 1. Field of the Invention

The present invention relates to video cameras, and more particularly to methods and circuits for adjusting the dynamic range of video signals to obtain picture details in the shadows without allowing other areas to glare.

### 2. Description of the Prior Art

The typical charge-coupled device (CCD) array can provide as much as 500 mV of dynamic range. But at some point, increasing light levels will not produce increased signal output, because the CCD array will saturate. It is quite common for a CCD array to be followed by a stage of amplification that limits the dynamic output range of the camera to as little as one-tenth of the range possible. Only a small portion of the linear operating region of the CCD array is used. Such amplifiers also bring up the picture brightness to make a more pleasing display. Displays taken directly from the CCD array, or where gains in the amplifier are set low, usually result in pictures that appear too dark.

A user often has to be able to adjust the camera gain to be able to pick out various items-of-interest in a video picture. For example, various lighting conditions and weather changes can change the optimum gain needed to discern license plate numbers in video images obtained by parking lot cameras. An operator has to vary the camera gain in order to see each car's license plate number clearly. This phenomenon prevents automatic recognition systems from operating efficiently, and slows down manually operated systems.

### SUMMARY OF THE INVENTION

It is therefore an object of the present invention to provide a camera system that can better use the dynamic range of a CCD image array.

It is another object of the present invention to provide a CCD imaging system that is inexpensive to manufacture.

Briefly, a CCD video camera system embodiment of the present invention comprises a CCD imaging device connected to a low-gain amplifier. An analog-to-digital converter converts the analog output of the amplifier to a full-range digital video signal. Such addresses a digital look-up table to produce a digital video output according to one of several selectable range-correction curves. Such range-correction curves comprise two linear slopes that join at one knee or three slopes joined by two knees. Each the linear parts have different gain slopes. The range-correction curves are selected on the basis of the gain slope of the linear slopes, and the knee-points.

An advantage of the present invention is that a CCD camera system is provided that can provide increased image details in darker areas of a picture.

Another advantage of the present invention is that a CCD imaging system is provided that can be used in systems that automatically adapt to a variety of lighting conditions and imaging targets.

These and other objects and advantages of the present invention will no doubt become obvious to those of ordinary skill in the art after having read the following detailed description of the preferred embodiments which are illustrated in the drawing figures.

### IN THE DRAWINGS

Fig. 1 is a functional block diagram of a camera system embodiment of the present invention; and
Fig. 2 is a graph representing the dual-slope transfer functions that can be stored as digital tables in the look-up table of Fig. 1.

### DETAILED DESCRIPTION OF THE PREFERRED EMBODIMENT

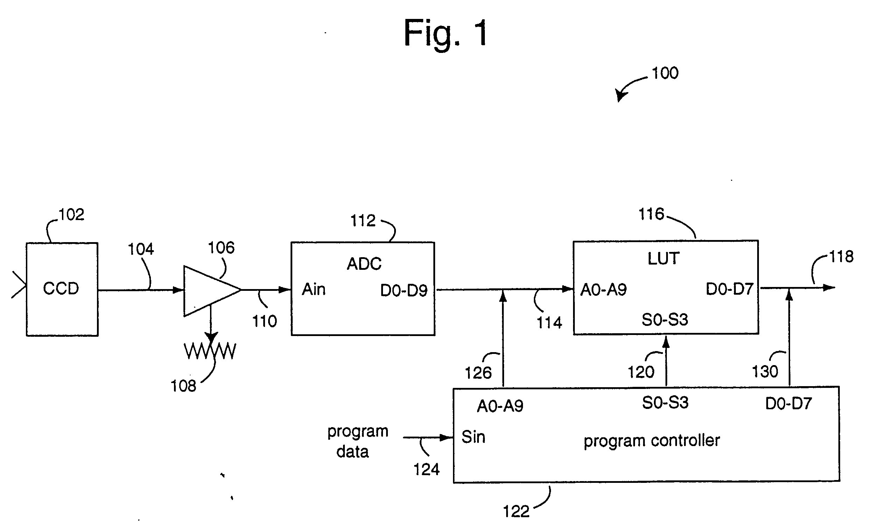

A camera system embodiment of the present invention is illustrated in Fig. 1 and is referred to herein by the general reference numeral 100. The system 100 includes a CCD-imaging device 102 that produces a CCD-signal 104. An amplifier 106 set at a relatively low gain by an adjustment 108 helps produce an amplified analog signal 110. An analog-to-digital converter (ADC) 112 produces, e.g., a ten-bit digital video output signal 114. The gain of amplifier 106 is preferably set so that the dynamic output range of CCD 102 matches the digital dynamic range of ADC 112. A look-up table (LUT) 116 converts each digital input word in digital video output signal 114 to a modified word in a system output signal 118, e.g., an eight-bit value. A curve-selection signal 120, e.g., a four-bit digital value, is used to choose which predetermined correction curve inside LUT 116 is to be used. Each range-correction curve comprises two linear slopes that join at a knee and have different gain slopes. The range-correction curves are selected on the basis of the gain slope of the first of the two linear slopes, and the knee-point.

Therefore, the LUT 116 is not used to store the equivalent of a "gamma-correction" curve, which is a continuous algebraic function and usually implemented with analog techniques. Embodiments of the present invention use only dual-slope compensation conversions that can be precisely controlled with digital techniques and devices. Such also are not continuous algebraic functions, and comprise exactly two linear segments with different gains and joined at a knee-point.

In alternative embodiments of the present invention, the LUT 116 is programmable and downloadable. Such can be useful to load and store the initial look-up tables stored by LUT 116 and selected by signal 120. If LUT 116 is made programmable and downloadable, such can also be useful in applications where the optimum dual-slope compensation conversions need to be empirically derived.

For example, a download and reprogramming controller 122 receives new dual-slope transfer functions to load in LUT 116 from a program data signal 124 at a serial input port. The LUT 116 is placed in a reprogramming mode. An address output signal 126 and a selection output signal force an address on the LUT 116 and a data output 130 forces a new write data on the data ports of the LUT 116. For example, the controller 122 can be a flash memory controller and the LUT 116 can be a flash memory device.

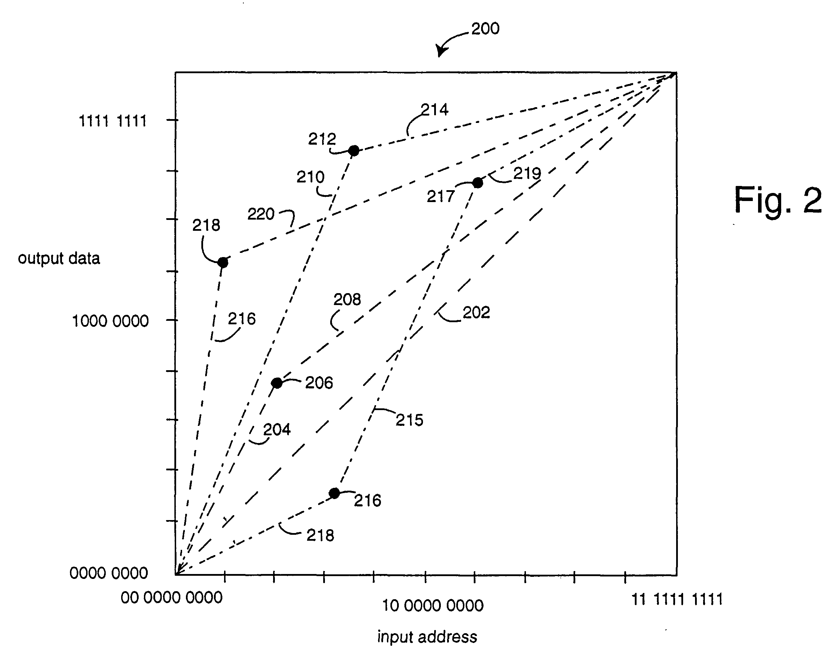

Fig. 2 represents a digital transfer function 200 that is preferably embodied in the LUT 116 (Fig. 1). Such-LUT 116 can be implemented with a programmable read only memory (PROM), e.g., FLASH memory. In one embodiment of camera system 100, the LUT 116 preferably has a ten-bit input address and an eight-bit data output. Therefore, the digital transfer function 200 is illustrated in Fig. 2 with a X-coordinate that ranges from digital binary 00,0000,0000 at zero to 11,1111,1111 at full scale. Such input produces a transfer function that outputs on the Y-coordinate that ranges from digital binary 0000,0000 at zero to 1111,1111 at full scale.

A number of selectable transfer functions are shown included in the digital transfer function 200. A straight linear transfer function 202 is included for illustration purposes only. A linear transfer function could be included in LUT 116, but probably would not be used in most applications of camera system 100. A first dual-slope transfer function has a high-gain linear slope 204 that breaks at a knee-point 206 and continues in a lower-gain linear slope 208. A second dual-slope transfer function has a high-gain linear slope 210 that breaks at a knee-point 212 and continues in a lower-gain linear slope 214. A third dual-slope transfer function has a high-gain linear slope 216 that breaks at a knee-point 218 and continues in a lower-gain linear slope 220.

A fourth transfer function is different. A high gain linear slope 215 is needed in the mid-range. It ranges between a pair of knee-points 216 and 217. A pair of lower gain slopes 218 and 219 are used in the extremes of dark and light.

In alternative embodiments of the present invention, three or more knee-points are used and are joined by a multitude of interconnection linear slopes of various gains. It can happen in particular applications that more than one portion of the dynamic range requires high-gain.

The LUT 116 could contain many more such dual-slope and multi-slope transfer functions all selectable by signal 120. - Those illustrated in Fig. 2 are simply used to describe the concepts needed for successful implementations.

The lower ranges of the input address and output data in Fig. 2 represent the darker scenes in a digital video image. The increased gains represented by slopes 204, 210, and 216, over linear slope 202, produces video images with enhanced details. One or more of these may be preferred by a user or automatic image recognition system to pull up details of interest in a particular video frame.

In alternative embodiments of the present invention, a particular one of the dual-slope transfer functions 204-220 may be applied to every pixel in a video frame. Or, the dual-slope transfer functions 204-220 may be applied one at a time to sections of a video frame. For example, the top half of a video frame may produce better images for things-of-interest if the dual transfer function 204-208 is selected. But, the bottom half of the video frame may produce better images for things-of-interest if the dual transfer function 210-214 is selected. Of course, the opposite can be implemented wherein the brighter or top-end range has the most gain. In Fig. 2, such would involve knee-points that are below linear slope 202.

Embodiments of the present invention are particularly useful in manufacturing quality control. For example, fine scratches in the surfaces of silicon wafers and chips can be discerned even in the presence of shimmer, glare, and reflections. In the automated manufacturing of glass bottles and containers, cracks and other defects in the glass itself can be spotted even when the lighting conditions are otherwise adverse. In some applications, backlighting needed to candle the pieces can be eliminated. Even sunset lighting conditions that can ordinarily produce impossible glare conditions can be tolerated in automatic vehicle license plate recognition systems.

Some prior art devices apply image processing techniques where the gain of darker or lighter video frames has increased gain, but such do not have the full dynamic range of the original CCD output 104 to work with. Therefore, a large amount of possible resolution is unavailable in such prior art devices.

Although the present invention has been described in terms of the presently preferred embodiments, it is to be understood that the disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

## Claims

1. A video camera system, comprising:
an imaging device with an analog video output having a linear dynamic range;
a variable amplifier connected to adjust the analog gain of said analog video output and to produce an amplified analog video signal;
an analog-to-digital converter (ADC) connected to receive said amplified analog video signal and for providing a digital conversion in which said linear dynamic range of the imaging device is fully preserved through to a digital video output; and
a digital translation table connected to receive said digital video output and providing for a dual-slope output conversion in which a first linear digital gain is applied to a zero-to-middle part of said linear dynamic range of the imaging device, and a second linear digital gain is applied to a middle-to-full-scale part of said linear dynamic range of the imaging device, and having a final digital video output;
wherein, image details are rendered more clearly and that would otherwise be lost to view in any low-gain portions of a video image frame.

2. The system of claim 1, wherein:
the digital translation table in which said dual-slope output conversion includes a zero-to-middle part with a single gain greater than one, and a middle-to-full-scale part with a single gain less than one, and such that a knee-point joins them.

3. The system of claim 1, wherein:
the digital translation table in which said dual-slope output conversion includes a zero-to-middle part with a single gain less than one, and a middle-to-full-scale part with a single gain greater than one, and such that a knee-point joins them.

4. The system of any one of claims 1-3, wherein:
the digital translation table in which a plurality of said dual-slope output conversions coexist and are selectable.

5. The system of any one of claims 1-4, wherein:
the digital translation table in which said dual-slope output conversion is programmable and downloadable.

6. The system of any one of claims 1-5, further comprising:
a programming and download controller connected to the digital translation table and for providing modifications to said dual-slope output conversion.

7. A method of video imaging comprising the steps of:
using an imaging device to produce an analog video signal, wherein said analog video signal has a limited linear operating range between a first magnitude and a second'magnitude;
converting said analog video signal linearly to a digital video signal, wherein said digital video signal comprises a limited number of bits that together represent digital words that range between a third magnitude and a fourth magnitude, and wherein said first magnitude is converted to said third magnitude, and said second magnitude is converted to said fourth magnitude; and
translating said digital words in said digital video signal to a digital video output according to one of two linear amplifications, wherein a first linear amplification exceeds a second linear amplification in gain, and said first linear amplification provides for increased gain in a darker portion of a video image, and said second linear amplification provides for reduced gain in a brighter portion of said video image.

8. The method of claim 7, wherein:
the step of translating uses a digital memory device to store a look-up table, and provides for a choice of first and second linear amplification gains.

9. The method of claims 7 or 8, further comprising the step of:
downloading and programming a new look-up table to replace said look-up table wherein an image detail in said video image is more clearly rendered.

10. A CCD video camera system, comprising:
a CCD-imaging device with an analog video output having a linear dynamic range;
an analog-to-digital converter (ADC) connected to receive said analog video signal and for providing a digital conversion in which said linear dynamic range of the CCD-imaging device is fully preserved through to a digital video output;
a digital translation table connected to receive said digital video output and providing for a dual-slope output conversion in which a first linear digital gain is applied to a zero-to-middle part of said linear dynamic range of the CCD-imaging device, and a second linear digital gain is applied to a middle-to-full-scale part of said linear dynamic range of the CCD-imaging device, and having a final digital video output;
a plurality of said dual-slope output conversions coexistent and disposed in the digital translation table, and that are selectable; and
a programming and download controller connected to the digital translation table and for providing modifications to said dual-slope output conversions;
wherein, image details are rendered more clearly and that would otherwise be lost to view in any low-gain portions of a video image frame by increased gain provided by the digital translation table and a conservation of the full range of said linear dynamic range through to said final digital video output.

11. A video camera system, comprising:
an imaging device with an analog video signal having a linear dynamic range;
an analog-to-digital converter (ADC) connected to receive said analog video signal and for providing a digital conversion in which said linear dynamic range of the imaging device is fully preserved through to a digital video output; and
a digital translation table connected to receive said digital video output and providing for an output conversion in which at least two different linear digital gains are applied to said linear dynamic range of the imaging device, and having a final digital video output;
wherein, a highest-gain one of said at least two different linear digital gains is used to help render image details more clearly that would otherwise be lost to view in any other lower-gain portions of a video image frame.

12. The system of claim 11, wherein:
the digital translation table in which a multi-slope output conversion includes at least two knee-points that join said different linear digital gains.

13. The system of claims 11 or 12 further including a variable amplifier connected to adjust the analog gain of said analog video output and to produce an amplified analog video signal.
